# EUROPEAN PATENT APPLICATION

(11) **EP 4 793 871 A1**
(43) Date of publication of application: **19.08.2026**
(21) Application number: 25853026.0
(22) Date of filing: 13.06.2025
(51) Int. Cl.: G06Q 50/06

(54) **INFORMATION PROCESSING SYSTEM AND PROGRAM**

(30) Priority: 23.12.2024 JP 2024226475
(71) Applicant: J. MORITA TOKYO MFG. CORP., Kitaadachi-gun Saitama 362-0806 (JP)
(72) Inventor: ISHIMORI, Katsunari, Saitama 362-0806 (JP); HAYAKAWA, Yoshihiko, Saitama 362-0806 (JP); IWASAKI, Tetsuya, Saitama 362-0806 (JP)
(74) Representative: Strehl & Partner mbB
(86) International application number: PCT/JP2025/021461
(87) International publication number: WO 2026/140297

(57) **Abstract**

An acquisition part acquires the remaining amount information, which is information regarding remaining amount of fuel (step S101). The acquisition part acquires remaining amount information, which is information regarding the remaining amount of fuel left in each cartridge, for each cartridge. In step S102, a generation part generates bonus information, which is information regarding bonus granted to a user, based on the acquired remaining amount information (step S102). The generation part generates the bonus information for each cartridge. Subsequently, an association part associates the generated bonus information with the user using the fuel that was an object for acquiring the remaining amount information (step S103).

## Description

### Technical Field

The present disclosure relates to an information processing system and program.

### Background Art

Patent Literature 1 discloses a fuel battery device which includes a fuel battery; and a control part that controls a first electronic apparatus that performs a notification to a user and delivers a hot water using an exhaust heat of the fuel battery by an operation of the user.

### Citation List

### Patent Literature

Patent Literature 1: Japanese Patent Application Laid-Open Publication No. 2024-133311

### Summary of Invention

### Technical Problem

When disasters such as earthquakes occur, the external power supply to equipment is likely to be interrupted. In such a case, the presence of a power generation function using a fuel cell in each household or business establishment increases the possibility of supplying power to the equipment.

However, even if a fuel cell is provided, power cannot be generated unless the fuel used for power generation in the fuel cell is secured. To ensure fuel availability, it becomes necessary to conserve fuel during the daily use of the fuel cell.

The purpose of this disclosure is to promote the conservation of fuel used for power generation in the fuel cell.

### Solution to Problem

An information processing system to which the present disclosure is applied includes: an acquisition unit configured to acquire a remaining amount information that is information regarding a remaining amount of fuel supplied to a fuel cell; a generation unit configured to generate bonus information based on the acquired remaining amount information, the bonus information being information regarding a bonus granted to a user; and an association unit configured to associate the generated bonus information with a user who uses the fuel, the fuel being an object for acquiring the remaining amount information.

Here, the generation unit may generate information showing that the bonus is to be granted as the bonus information when the remaining amount specified by the acquired remaining amount information is larger than a predetermined threshold value.

In addition, the generation unit may generate information showing that the bonus is not to be granted as the bonus information when the remaining amount specified by the acquired remaining amount information is smaller than the predetermined threshold value.

Moreover, the information processing system may further include a change unit configured to change the threshold value used for comparison with the remaining amount.

Furthermore, the change unit may change the threshold value used for comparison with the remaining amount in accordance with passage of time.

In addition, the change unit may decrease the threshold value used for comparison with the remaining amount in accordance with passage of time.

Moreover, the acquisition unit may acquire the remaining amount information in each time of passing a predetermined time, and the generation unit may generate information showing that the bonus is to be granted as the bonus information when an absolute value of a difference between the remaining amount specified by the acquired remaining amount information and the remaining amount specified by a remaining amount information that is acquired prior to the remaining amount information is smaller than a predetermined threshold value.

Furthermore, the generation unit may generate information showing that the bonus is not to be granted as the bonus information when the absolute value of the difference is larger than the predetermined threshold value.

In addition, the acquisition unit may acquire the remaining amount information in each time of passing a predetermined time, and the generation unit may generate the bonus information in each time of passing a predetermined time based on the remaining amount information acquired in each time of passing the predetermined time.

Moreover, the information processing system may further include a setting unit configured to set the threshold value used for comparison with the remaining amount for each user.

Furthermore, the setting unit may set the threshold value used for comparison with the remaining amount based on a user's past usage history of a fuel.

In addition, the setting unit may set the threshold value so that, as an average value of user's past usage amount of the fuel is larger, the threshold value is smaller.

Moreover, the generation unit may generate information showing that a larger number of bonus than a number of bonuses in a case where the remaining amount is smaller than a predetermined threshold value is to be granted as the bonus information when the remaining amount specified by the acquired remaining amount information is larger than the threshold value.

Furthermore, the generation unit may generate information showing that a larger number of types of bonus than a number of types of bonus in a case where the remaining amount is smaller than a predetermined threshold value is to be granted as the bonus information when the remaining amount specified by the acquired remaining amount information is larger than the threshold value.

In addition, the generation unit may generate information showing that a bonus with a larger monetary value than a monetary value granted in a case where the remaining amount is smaller than a predetermined threshold value is to be granted as the bonus information when the remaining amount specified by the acquired remaining amount information is larger than the threshold value.

Furthermore, when the present disclosure is considered as a program, the program to which the present disclosure is applied is a program including instructions that cause a computer to execute functions of: acquiring a remaining amount information that is information regarding a remaining amount of fuel supplied to a fuel cell; generating bonus information based on the acquired remaining amount information, the bonus information being information regarding a bonus granted to a user; and associating the generated bonus information with a user who uses the fuel, the fuel being an object for acquiring the remaining amount information.

### Advantageous Effects of Invention

According to the present disclosure, it is possible to promote the conservation of the fuel used for power generation in the fuel cell.

### Brief Description of Drawings

FIG. 1 is a diagram showing a management system of a fuel cell.
FIG. 2 is a diagram showing a configuration of a hardware of a management server.
FIG. 3 is a diagram showing the functional blocks achieved by the management server.
FIG. 4 is a flowchart showing a flow of processing which is performed in the management server.
FIG. 5 is a diagram showing a management table registered in an information storage device.
FIG. 6 is a flowchart showing a flow of processing which is performed by a generation unit or the like.
FIG. 7 is a diagram describing changes of a reference threshold value.
FIG. 8 is a diagram describing generation of bonus information.
FIG. 9 is a diagram describing generation of the bonus information based on differences.

### Description of Embodiments

Embodiments according to the present disclosure will be described with reference to the drawings in detail.

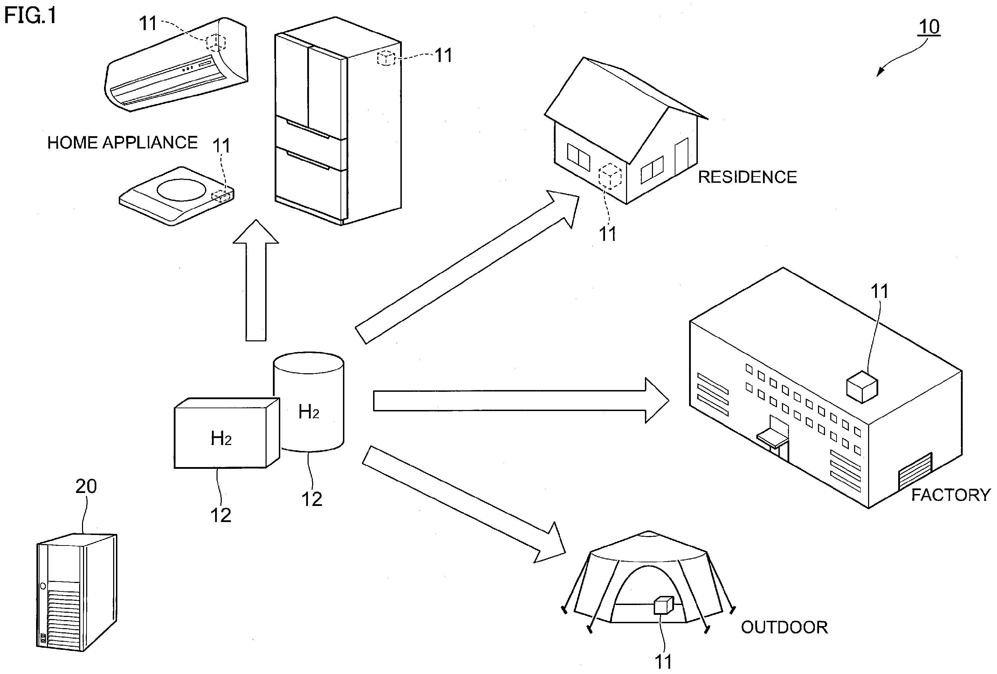

FIG. 1 is a diagram showing a management system 10 of the fuel cell.

In the management system 10 in the present embodiment, a fuel cell 11 that generates electricity. These fuel cells 11 are provided plurally.

The fuel cell 11 is installed, for example, in a residence or a factory. Portable fuel cell 11 also exists. The portable fuel cell 11 is, for example, taken to locations such as campsites and used outdoors. In addition, the fuel cell 11 is installed, for example, in a home appliance.

Supplying fuel to the fuel cell 11 is performed by a cartridge 12 accommodating the fuel.

Each user attaches the cartridge 12 to a housing where the fuel cell 11 is installed. As a result, supplying fuel from the cartridge 12 to the fuel cell 11 is performed.

Power generation is performed in the fuel cell 11.

When the fuel cell 11 is installed in a residence, a factory, or outdoors, the power by the power generation in the fuel cell 11 is supplied to equipment installed around the fuel cell 11.

In addition, when the fuel cell 11 is installed in the home appliance, the power by the power generation in the fuel cell 11 is supplied to this home appliance.

Moreover, in the management system 10 in the present embodiment, a management server 20 is provided.

The management server 20 acquires information regarding the remaining fuel amount in the cartridge 12, as described later. Thereafter, based on this acquired information, the management server 20 generates information regarding a bonus granted to the user.

Here, in the fuel cell 11, power is generated through a pair of redox reactions using a fuel such as hydrogen and an oxidizing agent. Oxygen in the air is often used as the oxidizing agent. Fuel is supplied to the fuel cell 11 from the above-mentioned cartridge 12.

In the present embodiment, hydrogen is supplied as fuel to the fuel cell 11 from the cartridge 12. In addition, air from the surroundings of the fuel cell 11 is supplied to the fuel cell 11.

In the fuel cell 11, power generation is performed using hydrogen, which is a gas, and oxygen contained in the air.

In the fuel cell 11, two electrodes are installed. In addition, an electrolyte is provided between the two electrodes. Moreover, a wire connecting the two electrodes is provided.

In the fuel cell 11, hydrogen is decomposed into hydrogen ions and electrons at one electrode. The hydrogen ions move through the electrolyte to the other electrode. Electrons move to the other electrode through the wire. This movement of the electrons generates power.

At the other electrode, oxygen contained in the air, hydrogen ions that have passed through the electrolyte, and electrons that have moved through the wire react, producing water as one example of a product.

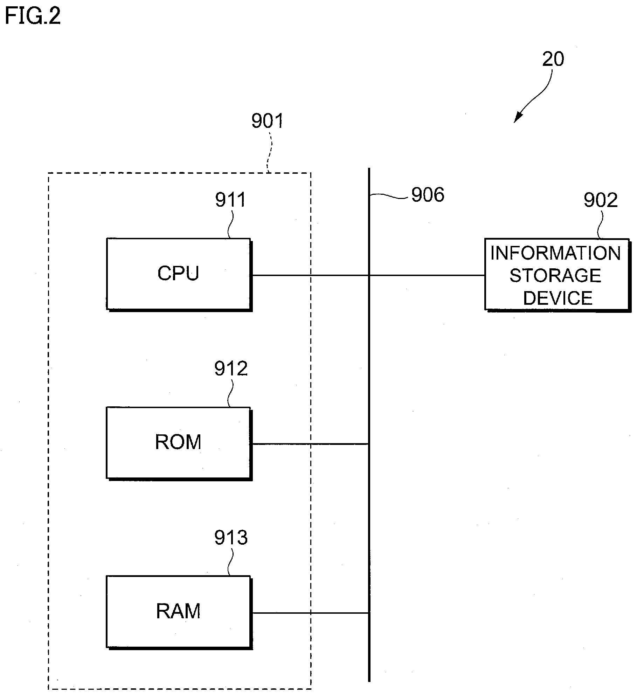

FIG. 2 is a diagram showing a configuration of the hardware of the management server 20.

In the management server 20, a processing unit 901 and an information storage device 902 for storing information are provided.

The processing unit 901 is configured by a computer.

The processing unit 901 has a CPU (Central Processing Unit) 911 as an example of a processor. In addition, the processing unit 901 has a ROM (Read Only Memory) 912 where a program is stored. Moreover, the processing unit 901 has a RAM (Random Access Memory) 913 used as a work area.

The information storage device 902 is achieved by existing devices such as a hard disk drive, semiconductor memory, or magnetic tape.

The processing unit 901 and the information storage device 902 are connected via a bus 906 and a signal line (not shown).

The program performed by the CPU 911 can be provided to the management server 20 via a recording medium.

The recording media includes, for example, magnetic recording media such as a magnetic tape and a magnetic disk. In addition, another example of the recording media includes optical recording media such as an optical disk. Moreover, another example of the recording media includes magneto-optical recording media. Furthermore, another example of the recording media includes semiconductor memory or the like.

The program performed by the CPU 911 may be provided to the management server 20 using a communication means such as the Internet.

In the present embodiment, the CPU 911 performs the program stored in the ROM 912 or the information storage device 902.

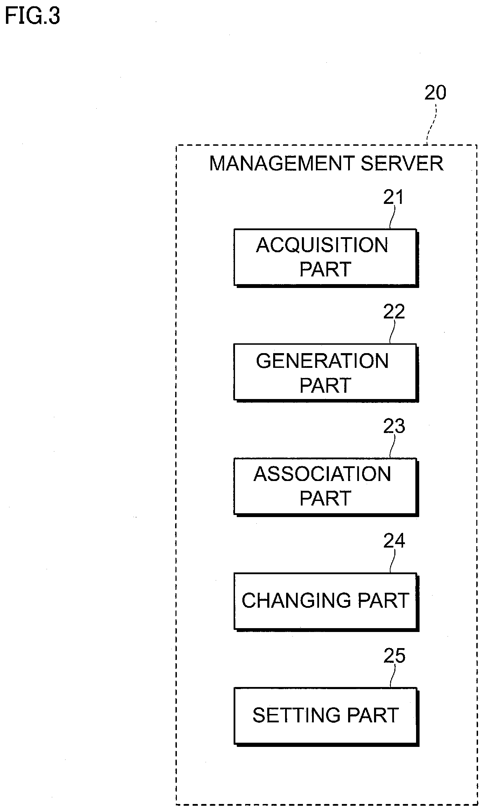

FIG. 3 is a diagram showing the functional blocks achieved by the management server 20.

In the present embodiment, since the CPU 911 provided on the management server 20 performs a program stored in the ROM 912, each of the functional units shown in FIG. 3 is realized.

In the present embodiment, the management server 20 functions as an information processing system. The management server 20 performs processing of information regarding the fuel cell 11.

In the present embodiment, the information processing system is realized by a single device, the management server 20. However, this is not limited to this configuration; the information processing system may also be composed of plural information processing devices.

In the present embodiment, as the functional units, an acquisition part 21, a generation part 22, an association part 23, a changing part 24, and a setting part 25 are provided.

The acquisition part 21 acquires remaining amount information, which is information regarding the remaining amount of fuel in the cartridge 12.

The generation part 22 generates bonus information, which is information regarding a bonus granted to a user, based on the acquired remaining amount information.

The association part 23 associates the generated bonus information with the user using the fuel that is an object for acquiring the remaining amount information. In other words, the association part 23 associates the generated bonus information with the user associated with the cartridge 12 that is the object for acquiring the remaining amount information.

The changing part 24 changes a threshold value used for comparison with the remaining amount.

The setting part 25 sets a threshold value used for comparison with the remaining amount. In other words, the setting part 25 performs the initial setting of the threshold value used for comparison with the remaining amount.

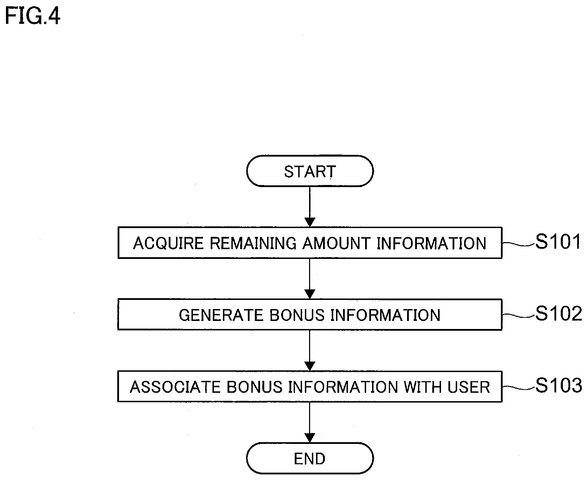

FIG. 4 is a flowchart showing a flow of processing which is performed in the management server 20 in the present embodiment.

In the present embodiment, the acquisition part 21, as one example of an acquisition unit, acquires the remaining amount information, which is information regarding the remaining amount of fuel (step S101).

The acquisition part 21 acquires the remaining amount information, which is information regarding the remaining amount of fuel left in each cartridge 12, for each cartridge 12.

Description is omitted above, however, in the present embodiment, each cartridge 12 is provided with a communication unit for communicating with an external device.

The above-mentioned remaining amount information, which is information regarding the remaining amount of fuel remained in the cartridge 12, is output from this communication unit. In the present embodiment, the remaining amount information is output every predetermined time elapse.

Note that, the remaining amount information includes, in addition to the information regarding the remaining amount itself, date and time information which is information indicating the date and time when the remaining amount has been acquired.

In addition, from the communication unit, start information is output, which is information indicating that the use of the cartridge 12 has started when the use of the cartridge 12 begins.

On the cartridge 12, a sensor that detects fuel discharge is provided. In the cartridge 12, the start of using the cartridge 12 is detected, with the detection of fuel discharge by this sensor. Accordingly, start information is output from the communication unit of the cartridge 12.

Moreover, on the cartridge 12, a control board is provided, which controls each part of the cartridge 12.

The remaining amount information and the start information, which are output from the communication unit are output via wired or wireless means for communication devices located nearby, such as the user's smartphone or PC (Personal Computer).

Furthermore, the start information and the remaining amount information are sent to the management server 20 via the above-mentioned communication devices. Between the communication devices and the management server 20, a communication line (not shown) is provided to connect both.

As a result, the management server 20 acquires the start information which is information indicating that the use of the cartridge 12 has begun. The start information includes information regarding the date and time when the use of the cartridge 12 has begun.

In addition, the management server 20 acquires the remaining amount information which is information regarding the fuel remaining in the cartridge 12.

The management server 20 acquires the start information and the remaining amount information for each cartridge 12.

Note that, each cartridge 12 is provided with a memory (not shown). In this memory, identification information is stored, which is information used to identify each cartridge 12 from other cartridges 12.

In addition to the start information and the remaining amount information, this identification information is also output from each cartridge 12. As a result, the acquisition part 21 of the management server 20 acquires the start information, the remaining amount information, and the identification information for each cartridge 12.

The start information and the remaining amount information acquired by the management server 20 are registered in a management table stored in the information storage device 902 shown in FIG. 2. This registration is performed using the identification information as a key.

In the management table, the identification information granted to each cartridge 12 is pre-registered. The remaining amount information and the start information transmitted from the cartridge 12 along with the identification information are registered in the management table in a manner where the identification information is associated with the identification information already registered in the management table.

The remaining amount information is transmitted from the cartridge 12 to the management server 20, associated with the identification information, each time a predetermined period of time elapses.

This remaining amount information, sequentially sent from the cartridge 12, is registered in the management table in a manner where the remaining amount information is associated with the identification information already registered in the management table.

Note that, details regarding the management table will be described later.

A method for acquiring information regarding the remaining amount of fuel in the cartridge 12 will be described.

In the cartridge 12, information regarding the remaining fuel amount may be acquired by using a known method.

In the cartridge 12, for example, information regarding the remaining fuel amount is acquired based on the pressure inside the cartridge 12.

In addition, for example, information regarding the remaining fuel amount may be acquired based on the amount of fuel discharged from the interior of the cartridge 12 to the exterior.

Moreover, information regarding the remaining fuel amount may also be acquired based on the amount of electricity generated by the fuel cell 11.

Furthermore, information regarding the remaining fuel amount may also be acquired based on the operating status of the equipment to which the electricity generated by the fuel cell 11 is supplied.

Referring to FIG. 4 for further explanation.

After step S101 is processed, the processing of step S102 is performed.

In step S102, the generation part 22, which is a generation unit, generates bonus information, which is information regarding a bonus granted to the user, based on the acquired remaining amount information described above (step S102). The generation part 22 generates this bonus information for each cartridge 12.

The generation part 22 reads and acquires the above-mentioned remaining amount information, which has been temporarily registered in the management table, from this management table.

More specifically, the generation part 22 reads and acquires the remaining amount information at the specific time elapsed timing, which is the timing when the specific time has elapsed from the reference time, from this management table.

Note that, a case can be assumed that remaining amount information has not been acquired at the specific time elapsed timing. In this case, the generation part 22 reads and acquires the remaining amount information having a specific relationship with the specific time elapsed timing, from this management table.

Specifically, for example, the generation part 22 reads and acquires the remaining amount information which has been acquired after the specific time elapsed timing, and has been acquired at the timing closest to this specific time elapsed timing, from the management table.

In addition, the generation part 22 generates bonus information, which is information regarding a bonus granted to the user, based on the acquired remaining amount information.

In the present embodiment, the start of use of the cartridge 12 is set as the reference time.

The acquisition part 21 acquires, the remaining amount information at the specific time elapsed timing, which is the timing when a predetermined specific time has elapsed from this reference time, as the remaining amount information.

Note that, the reference time may be the time other than the start of use of the cartridge 12, such as when the cartridge 12 is opened.

The generation part 22 identifies the specific time elapsed timing, based on the start information registered in the management table.

Thereafter, the generation part 22 reads and acquires the remaining amount information acquired at this specific time elapsed timing from the management table.

Note that, as described above, a case also can be assumed that remaining amount information has not been acquired at the specific time elapsed timing. In this case, the generation part 22 reads and acquires the remaining amount information having a specific relationship with the specific time elapsed timing, from the management table, as described above.

Thereafter, the generation part 22 generates the bonus information, which is information regarding a bonus granted to the user, based on this acquired remaining amount information.

The generation part 22 generates the bonus information, based on this acquired remaining amount information and a predetermined reference threshold value.

Subsequently, the association part 23 as one example of an association unit, associates the generated bonus information with the user using the fuel that is the object for acquiring the remaining amount information (step S103).

More specifically, the association part 23 associates the generated bonus information with the user associated with the cartridge 12 that is the object for acquiring the remaining amount information.

More specifically, the association part 23 registers this bonus information in the management table, in a manner where the bonus information is associated with the identification information which is pre-registered in the management table and matches the identification information sent along with the remaining amount information.

As a result, the bonus information is associated with the user associated with the cartridge 12 that is the object for acquiring the remaining amount information.

As a result, the bonus is granted to the user.

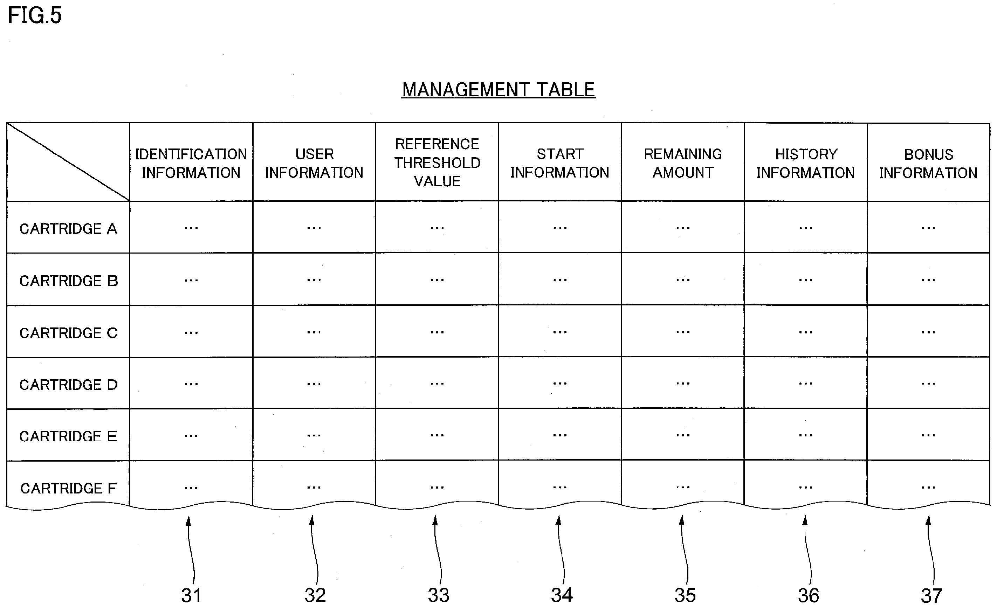

FIG. 5 is a diagram showing the management table registered in the information storage device 902.

In the present embodiment, information regarding each cartridge 12 is registered in the management table shown in FIG. 5. The management table is stored in the information storage device 902 shown in FIG. 2

In the management table, the identification information, user information which is information for identifying the user, and a reference threshold value, are registered in a manner corresponding to each cartridge 12.

The identification information is registered in an identification information registration field 31. In addition, the user information is registered in a user information registration field 32. Moreover, the reference threshold value is registered in a threshold value registration field 33.

In the present embodiment, each cartridge 12 and the identification information, the user information, and the reference threshold value are registered in the management table, in a state where each cartridge 12 is mutually associated with the identification information, the user information, and the reference threshold value.

In the present embodiment, before the processing shown in FIG. 4 is started, the identification information, the user information, and the reference threshold value are registered in the management table in advance.

The user information includes, for example, the user's name and address. In addition, another example of the user information includes information regarding the destination for sending information, such as an email address. Moreover, another example of the user information includes the user's gender and age.

The above-mentioned information is entered in advance by the user operating his/her own equipment, such as a smartphone or a PC. In addition, the above-mentioned information is transmitted from this equipment to the management server 20 and registered in management table of the management server 20.

In the management table, a start information registration field 34 which is a field for registering the start information and a remaining amount information registration field 35 which is a field for registering the remaining amount information, are further provided.

In the present embodiment, the acquired start information described above is registered in this start information registration field 34.

In addition, the remaining amount information sequentially acquired and transmitted to the management server 20 is registered in the remaining amount information registration field 35.

In the present embodiment, the identification information, the start information, and the remaining amount information are transmitted from the cartridge 12 to the management server 20. As described above, the management server 20 registers the start information and the remaining amount information in the management table, using the identification information as a key.

Moreover, in the management table, a history information registration field 36 is also provided, which is a field for registering history information, which is information regarding the usage history of the cartridge 12 previously used by the user.

In the present embodiment, information regarding the amount of fuel used in the cartridge 12 previously used by the user is registered in this history information registration field 36.

Specifically, in the present embodiment, the remaining amount information in the cartridge 12 previously used by the user is registered in this history information registration field 36.

The remaining amount information is registered as time-series data. In addition to the information regarding the remaining fuel amount itself, date and time information which is information indicating the date and time when the remaining amount has been acquired is also registered in the history information registration field 36.

In the history information registration field 36, the information regarding the remaining amount itself and the date and time information are registered in a state where the information regarding the remaining amount itself and the date and time information are mutually associated.

In the present embodiment, the remaining amount information for the cartridge 12 previously used by the user is not discarded but is registered in the history information registration field 36.

In the management table, a bonus information registration field 37 is further provided, which is a registration field for the above-mentioned bonus information generated by the generation part 22.

In the present embodiment, the association part 23 performs the registration of the bonus information for the bonus information registration field 37. The association part 23 registers the bonus information generated by the generation part 22 in the bonus information registration field 37.

The association part 23 performs the registration of the bonus information in a manner corresponding to the user information.

The association part 23 performs the registration of this bonus information into the management table using the transmitted identification information which is the identification information sent from the cartridge 12, as the key.

The association part 23 performs the registration of this bonus information into the management table, in a manner where the bonus information is associated with the identification information which is among the identification information registered in the management table and matches this transmitted identification information.

The identification information already registered in the management table is associated with the user information.

When the bonus information is registered in a manner where the bonus information is associated with the identification information already registered in the management table, the bonus information becomes associated with the user information, as a result.

Here, the bonus may be either tangible or intangible.

An intangible bonus is, for example, electronic points. More specifically, an intangible bonus is, for example, electronic points having a value equivalent to money.

In addition, a tangible bonus is, for example, an item having entity, such as a product.

When the bonus is tangible, information indicating this tangible bonus is registered in the bonus information registration field 37 of the management table.

In the present embodiment, one of information indicating that the bonus is granted and information indicating that the bonus is not granted is registered in the bonus information registration field 37 of the management table, as the bonus information.

Moreover, in the present embodiment, when the information indicating that the bonus is granted is registered in the bonus information registration field 37, information indicating the content of the bonus is registered in the bonus information registration field 37.

When the information indicating the content of the bonus is predetermined, the predetermined bonus information is read from the information storage device 902. Thereafter, this predetermined bonus information is registered in the bonus information registration field 37.

In other words, when the content of the bonus is determined as a default, the information regarding the content of the bonus determined as the default is registered in the bonus information registration field 37.

On the other hand, when the content of the bonus is not predetermined, the generation part 22 performs the processing to determine the information indicating the content of the bonus. Thereafter, the information indicating the content of the bonus obtained through this processing is registered in the bonus information registration field 37.

### [Processing by the generation part 22 or the like]

The processing performed by the generation part 22 or the like will be described in detail.

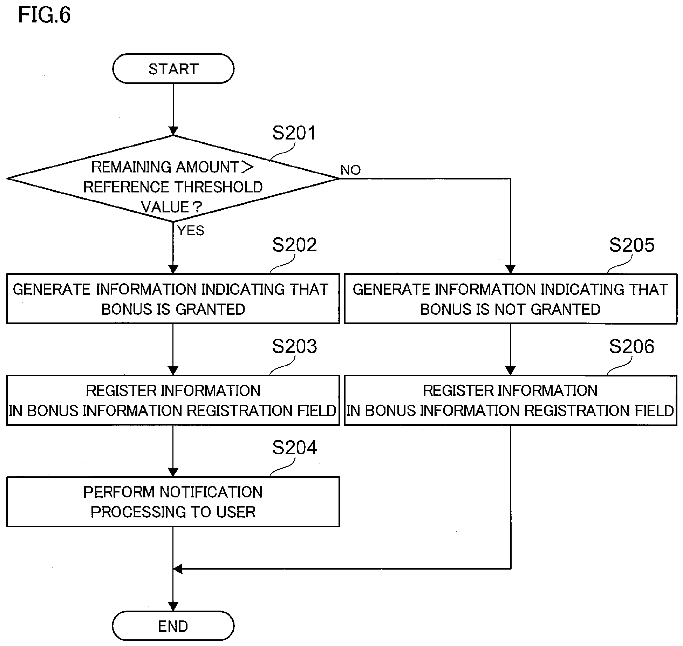

FIG. 6 is a flowchart showing a flow of the process which is performed by the generation part 22 or the like.

The generation part 22 determines whether the remaining amount, specified by the remaining amount information acquired by the acquisition part 21 and registered in the management table, is greater than a predetermined reference threshold value (step S201).

Thereafter, when the generation part 22 determines in step S201 that the remaining amount is greater than the predetermined reference threshold value, the generation part 22 generates information indicating that the bonus is granted, as the bonus information (step S202).

Thereafter, the association part 23 registers this information indicating that the bonus is granted, in the bonus information registration field 37 of the management table (step S203).

In the processing of step S201, the generation part 22 acquires the remaining amount information at the specific time elapsed timing, from the management table. The generation part 22 reads and acquires this remaining amount information, from the remaining amount information registration field 35 of the management table.

Furthermore, the generation part 22 reads and acquires the reference threshold value from the threshold value registration field 33 of the management table.

Subsequently, in the processing of step S201, the generation part 22 determines whether the remaining amount identified by the acquired remaining amount information is greater than the acquired reference threshold value.

Thereafter, when the generation part 22 determines that the remaining amount is greater than the reference threshold value, the generation part 22 generates the information indicating that the bonus is granted, as the bonus information in step S202.

Note that, when the content of the bonus is not determined as the default, the generation part 22 generates also information indicating the content of the bonus as well, at this time.

When the content of the bonus is predetermined as the default, generating information indicating the content of the bonus is unnecessary. In this case, the predetermined content is registered in the bonus information registration field 37.

In contrast, when the content of the bonus is not predetermined, the generation part 22 generates also information indicating the content of the bonus as well.

When generating also the information indicating the content of the bonus as well, the generation part 22 generates the information indicating the content of the bonus, based on the user information. The generation part 22 generates the information indicating the content of the bonus, based on the user's gender, age, or the like, which are identified based on the user information.

Moreover, in addition to the above, as described later, the generation part 22 generates the information indicating the content of the bonus, based on the remaining amount and a content determination threshold value.

When the information indicating that the bonus is granted is registered in the bonus information registration field 37 in step S203, the processing in step S204 is performed.

In step S204, notification processing to the user is performed.

In step S204, the notification processing to the user is performed using the user's email address, or the like, contained in the user information. In this notification processing, the information indicating that the bonus is granted is sent to the user.

As a result, the information indicating that the bonus is granted is notified to the user via the terminal device possessed by the user.

In this case, the user recognizes that the bonus is granted to themselves.

As in the present embodiment, granting the bonus to the user creates an incentive for the user to try to save fuel. In this case, unnecessary fuel consumption is reduced.

On the other hand, in step S201, when it is not determined that the remaining amount is greater than the reference threshold value, the processing proceeds to step S205.

In step S205, the generation part 22 generates the information indicating that the bonus is not granted, as the bonus information.

Thereafter, the association part 23 registers this information indicating that the bonus is not granted, in the bonus information registration field 37 of the management table (step S206).

In this case, the notification processing to the user is not performed. Alternatively, information indicating that the bonus has not been granted is notified to the user.

In the present embodiment, as described above, the generation part 22 first generates the information indicating that the bonus is granted. Alternatively, the generation part 22 generates information indicating that the bonus is not been granted.

Thereafter, the association part 23 associates the above-mentioned information with the user.

The association part 23 registers this information in the management table in a manner where the above-mentioned information is associated with the user. Specifically, the association part 23 registers this information in the bonus information registration field 37 of the management table.

### [Processing for changing the reference threshold value]

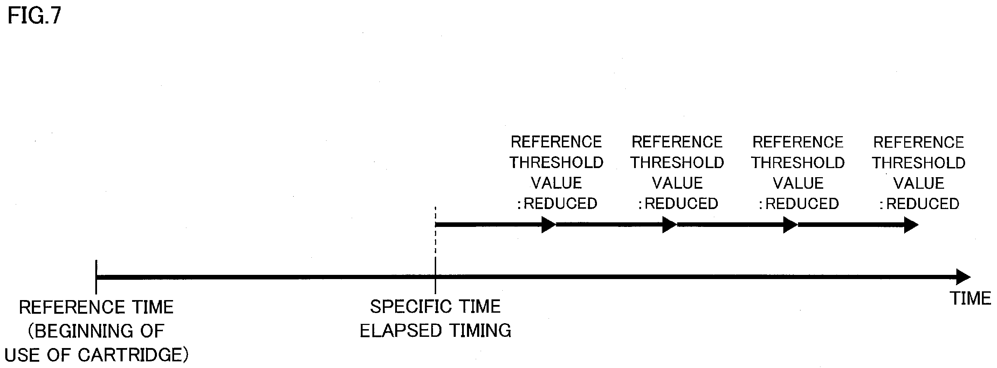

FIG. 7 is a diagram describing the change of the reference threshold value.

The above-mentioned reference threshold value used for comparison with the remaining amount may be changed.

In the present embodiment, the changing part 24, as one example of a changing unit, performs the change of the reference threshold value. The changing part 24 changes the above-mentioned reference threshold value used for comparison with the remaining fuel amount.

The changing part 24 changes the reference threshold value used for comparison with the remaining fuel amount, for example, in accordance with passage of time. More specifically, the changing part 24 reduces the reference threshold value in accordance with passage of time.

The changing part 24 reduces the reference threshold value each time a predetermined period of time elapses. For example, after the specific time elapsed timing, the changing part 24 reduces the reference threshold value by a predetermined value each time the predetermined period of time elapses.

In other words, after the specific time elapsed timing, the changing part 24 generates a new reference threshold value by subtracting a predetermined subtraction value from the reference threshold value set at a point where each time the predetermined time elapses.

This newly generated reference threshold value is registered in the threshold value registration field 33 of the management table.

Here, the generation of the bonus information by the generation part 22 may be performed not at the specific time elapsed timing, but at a timing later than the specific time elapsed timing.

In this case, it is assumed that the reference threshold value is constant and value of which is not reduced.

In this case, even though the user is conserving fuel, a situation where the remaining amount becomes smaller than the reference threshold value is likely to occur.

In contrast, when the reference threshold value is reduced, a situation where the remaining amount becomes greater than the reference threshold value is likely to occur.

Normally, fuel is gradually consumed, and the remaining fuel amount decreases in accordance with passage of time.

When the reference threshold value does not change and remains constant, the remaining amount falls below the reference threshold value in accordance with passage of time. After the specific time elapsed timing, the likelihood that the remaining amount falls below the reference threshold value increases.

In contrast, as described above, when the reference threshold value is reduced in accordance with passage of time, it is easy to occur that the remaining amount exceeds the reference threshold value even after the specific time elapsed timing.

In case where the user is conserving fuel, when the reference threshold value is reduced in accordance with passage of time, it is easy to occur that the remaining amount exceeds the reference threshold value.

After the specific time elapsed timing, the generation part 22 compares the remaining amount at a point in time with the latest reference threshold value registered in the threshold value registration field 33.

In other words, in this case, the generation part 22 compares the remaining amount at the point in time, with the reference threshold value after the subtraction processing of the above subtraction value has been performed.

Thereafter, when the remaining amount is greater than the latest reference threshold value, the generation part 22 generates the information indicating that the bonus is granted. On the other hand, when the remaining amount is smaller than the latest reference threshold value, the generation part 22 generates the information indicating that the bonus is not granted.

As mentioned above, the case where the bonus information is generated at a specific single timing has been described.

Specifically, as mentioned above, the case where the bonus information is generated at the specific time elapsed timing or at a timing later than the specific time elapsed timing, has been described.

Not limited to the above-mentioned case, the generation of the bonus information may be performed plurally.

In this case, the opportunities for granting the bonus to the user increase, promoting fuel savings by the user.

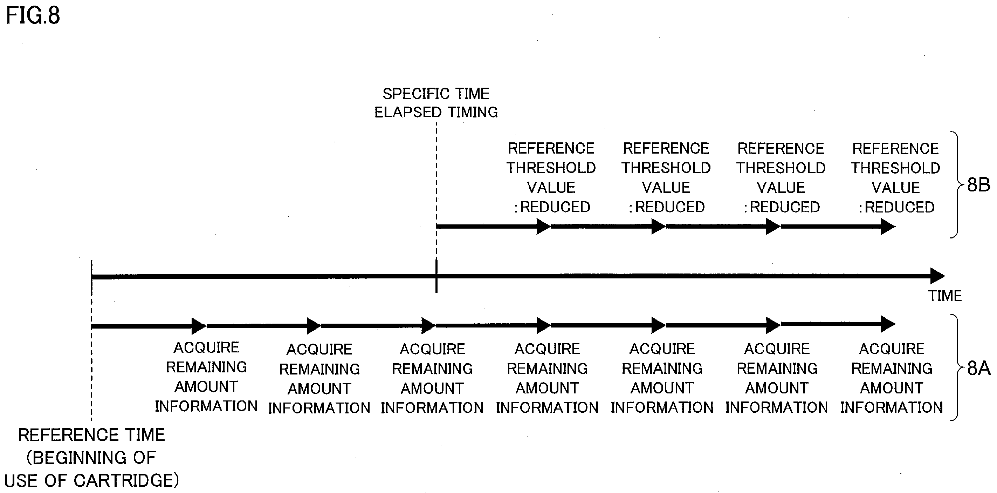

When the generation of the bonus information is performed plurally, for example, as shown with the reference numeral 8A in FIG. 8 (a diagram describing generation of the bonus information), the generation part 22 acquires the latest remaining amount information from the management table each time the predetermined period of time elapses.

In addition, in this case, the changing part 24, as shown with the reference numeral 8B, performs the subtraction process of the above subtraction value each time the predetermined time period elapses after the specific time elapsed timing, to reduce the reference threshold value.

Thereafter, each time the predetermined period of time elapses, and after the specific time elapsed timing, the generation part 22 compares the acquired latest remaining amount with the latest reference threshold value.

Subsequently, when the latest remaining amount is greater than the latest reference threshold value, the generation part 22 generates the information indicating that the bonus is granted. On the other hand, when the latest remaining amount is smaller than the latest reference threshold value, the generation part 22 generates the information indicating that the bonus is not granted.

### [Setting reference threshold value per user]

The above-mentioned reference threshold value used for comparison with the remaining amount information may be set per user.

In other words, the initial value of the reference threshold, registered in the threshold value registration field 33 of the management table shown in FIG. 5, may be set per user.

In the present embodiment, as described above, processing is performed, which is to subtract the subtraction value from the reference threshold value in accordance with passage of time.

In the present embodiment, the setting part 25 as one example of the setting unit, sets the initial value of the reference threshold value for each user before the subtraction value is subtracted.

The setting part 25 sets the initial value of the reference threshold value, based on, for example, the user's past usage history of the fuel.

Specifically, the setting part 25 sets this initial value of the reference threshold value such that, for example, the larger the average value of the user's past usage amount of the fuel, the smaller the initial value of the reference threshold value becomes.

In the present embodiment, information regarding usage history of the fuel is registered as time-series data in the history information registration field 36 (see FIG. 5) of the management table.

Specifically, in the history information registration field 36, the information regarding the usage history of used cartridge 12, which is the cartridge 12 previously used by the user, is registered as time-series data.

Specifically, in the present embodiment, as the information regarding the usage history of used cartridge 12, information regarding the remaining fuel amount and information regarding the date and time when the information regarding the remaining fuel amount has been acquired, are registered.

The setting part 25 calculates the usage amount of the fuel per a predetermined certain period for the used cartridge 12, based on the information regarding the remaining fuel amount registered in the history information registration field 36. In addition, the setting part 25 calculates the average value of this usage amount of the fuel per the certain period that is obtained plurally.

Thereafter, the setting part 25 sets the initial value of the reference threshold value, based on this average value. In particular, the setting part 25 sets the initial value by changing the value of the reference threshold value set as the default in advance, based on this average value.

The setting part 25 sets this initial value such that the larger the above-mentioned average value is, the smaller the initial value of the reference threshold value becomes.

In particular, the setting part 25 sets the initial value of the reference threshold value by subtracting a predetermined specific value from the reference threshold value set as the default in advance, when the average value is larger than a predetermined value.

Thereafter, the setting part 25 registers this initial value in the threshold value registration field 33 of the management table.

In this case, the generation part 22 compares, for example, the remaining fuel amount with this initial value registered in the threshold value registration field 33, at the specific time elapsed timing.

In other words, in this case, the generation part 22 compares the remaining fuel amount with the initial value of the reference threshold value set for each user, at the specific time elapsed timing.

When this processing is performed, even the user whose usage amount of the fuel is large, a case is likely to occur, which is that the remaining amount exceeds the reference threshold value, at the specific time elapsed timing.

In this case, the bonus is granted to the user whose usage amount of the fuel is large as well. In this case, an incentive for this user to try to save fuel is created.

Note that, in addition, the subtraction value described above to be reduced from the initial value of the reference threshold value may be set, based on the above-mentioned average value.

Specifically, this subtraction value is set such that the larger the average value is, the larger this subtraction value becomes. More specifically, when the average value is larger than a predetermined threshold value, the subtraction value is increased by a specific value compared to when the average value is not larger than the predetermined threshold value.

In this case, the opportunities for granting the bonus to the user whose usage amount of the fuel is large increase.

### [Generation of bonus information, based on differences]

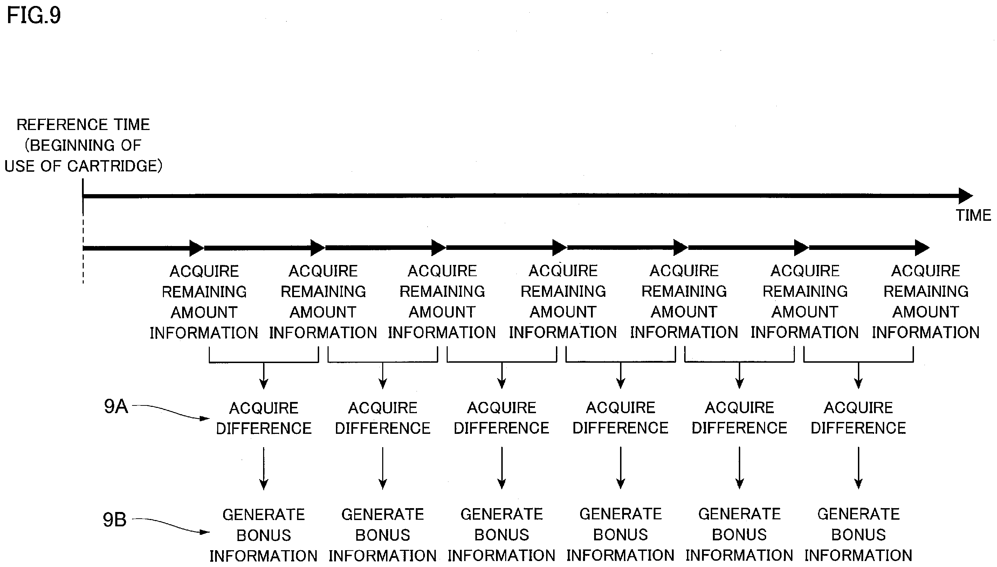

FIG. 9 is a diagram describing the generation of the bonus information based on differences.

Bonus information may be generated, based on the differences between the remaining amounts.

As mentioned above, the bonus information is generated, based on comparing the remaining amount with the reference threshold value, however, the bonus information may be generated, based on comparing the differences between the remaining amounts with the predetermined threshold value.

In this case, the generation part 22 generates information regarding the bonus, based on, for example, the remaining amount identified by the latest remaining amount information and the remaining amount identified by the past remaining amount information acquired by the acquisition part 21 prior to acquiring this remaining amount information.

In more detail, in this case, the generation part 22 calculates the difference between the remaining amount identified by the latest remaining amount information and, for example, the remaining amount identified by the past remaining amount information acquired at a timing one step prior to this latest remaining amount information, as shown with the reference numeral 9A.

Thereafter, as shown with the reference numeral 9B, the generation part 22 generates the bonus information, based on this difference.

When the absolute value of the difference is smaller than the predetermined threshold value, the generation part 22 generates the information indicating that the bonus is granted, as the bonus information.

On the other hand, when the absolute value of the difference is larger than the predetermined threshold value, the generation part 22 generates the information indicating that the bonus is not granted, as the bonus information.

Note that, as mentioned above, an example of the above-mentioned past remaining amount information is the remaining amount information acquired at the timing one step prior to the latest remaining amount information.

However, the past remaining amount information is not limited to the above example, and may be the remaining amount information acquired at a timing two or more steps prior to the latest remaining amount information.

Moreover, in addition to the above-mentioned example, the difference threshold value, which is the above-mentioned threshold value used for comparison with the difference, may also be set based on the above average value.

In this case, this difference threshold is set such that the larger the average value is, the larger the difference threshold value becomes. More specifically, when the average value is larger than the predetermined threshold, the difference threshold value is increased by a specific value compared to when the average value is not larger than the predetermined threshold.

In this case, the likelihood that the bonus is granted to the user whose usage amount of the fuel is large increases.

### [Details of bonus]

In the present embodiment, as described above, the generation part 22 generates the information indicating that the bonus is granted, as the bonus information, when the remaining amount is greater than the predetermined reference threshold value.

In addition, in the present embodiment, the generation part 22 generates the information indicating that the bonus is not granted, as the bonus information, when the remaining amount is less than this predetermined reference threshold value.

In the present embodiment, whether the bonus is granted is determined depends on whether the remaining amount exceeds the predetermined reference threshold value.

There is a case where the generation part 22 generates other information in addition to the information indicating that the bonus is granted and the information indicating that the bonus is not granted.

The generation part 22 generates the information indicating the content of the bonus as well, when the information indicating the content of the bonus is not set as the default in advance.

As described above, the generation part 22 generates the information indicating the content of the bonus, based on for example, the user's gender, age, or the like, which are identified based on the user information.

Furthermore, in addition to the above-mentioned example, the generation part 22 may make the information indicating the content of the bonus change, based on, for example, the remaining amount and a content determination threshold value.

When generating the information indicating the content of the bonus, the generation part 22 may change the content of this information indicating the content of the bonus, for example, in accordance with the volume of the remaining fuel amount.

The generation part 22 compares the remaining amount with the content determination threshold value, which is a predetermined threshold value prepared for determining the content of the bonus. Note that this content determination threshold value is larger than the above-mentioned reference threshold value.

For example, when the remaining amount is greater than the content determination threshold value, the generation part 22 may generate the information indicating that a greater number of bonuses is granted than the number granted when the remaining amount is smaller than this content determination threshold value.

Specifically, in this case, the generation part 22 may generate, for example, the information indicating that more points are granted than the points granted when the remaining amount is smaller than the content determination threshold value, as the bonus information.

Moreover, in addition to the above-mentioned example, when the remaining amount is greater than the content determination threshold value, the generation part 22 may generate the information indicating that a greater variety of bonuses are granted as the information indicating the content of the bonus.

In this case, the generation part 22 generates the information indicating that a greater variety of bonuses are granted than the variety of bonuses granted when the remaining amount is smaller than the content determination threshold value.

More specifically, in this case, for example, the generation part 22 generates information indicating that plural types of products are provided to the user.

When the remaining amount is smaller than the content determination threshold value, the generation part 22 generates, for example, the information indicating that a single type of product is provided to the user is generated as the information regarding the content of the bonus.

In contrast, when the remaining amount is greater than the content determination threshold value, the generation part 22 generates, for example, the information indicating that plural types of products are provided to the user.

Furthermore, in addition to the above-mentioned example, when the remaining amount is greater than the content determination threshold value, the generation part 22 may generate the information indicating that a bonus with a higher monetary value is granted as the information indicating the content of the bonus.

Specifically, the generation part 22 generates the information indicating that the bonus with a monetary value higher than the monetary value of the bonus granted when the remaining amount is smaller than the content determination threshold value.

The bonus granted to the user may be a single bonus set as the default. In addition, as described above, the content of the bonus granted to the user may be changed depending on whether the remaining amount is greater or smaller than the content determination threshold value.

### [Others]

A charge is levied on the user with the usage of fuel in the above-mentioned cartridge 12. The fee levied on the user may be determined based on the remaining amount registered in the remaining amount information registration field 35 of the management table.

Moreover, in addition, the charge may be levied on the user by a so-called subscription model.

Even when the charge is performed using the subscription model, the fee levied on the user may be determined based on the remaining amount registered in the remaining amount information registration field 35.

### Reference Signs List

11...Fuel cell, 12...Cartridge, 20...Management server, 21...Acquisition part, 22...Generation part, 23...Association part, 24...Changing part, 25...Setting part

## Claims

1. An information processing system comprising:
an acquisition unit configured to acquire a remaining amount information that is information regarding a remaining amount of fuel supplied to a fuel cell;
a generation unit configured to generate bonus information based on the acquired remaining amount information, the bonus information being information regarding a bonus granted to a user; and
an association unit configured to associate the generated bonus information with a user who uses the fuel, the fuel being an object for acquiring the remaining amount information.

2. The information processing system according to claim 1, wherein the generation unit generates information showing that the bonus is to be granted as the bonus information when the remaining amount specified by the acquired remaining amount information is larger than a predetermined threshold value.

3. The information processing system according to claim 2, wherein the generation unit generates information showing that the bonus is not to be granted as the bonus information when the remaining amount specified by the acquired remaining amount information is smaller than the predetermined threshold value.

4. The information processing system according to claim 2, further comprising
a change unit configured to change the threshold value used for comparison with the remaining amount.

5. The information processing system according to claim 4, wherein the change unit changes the threshold value used for comparison with the remaining amount in accordance with passage of time.

6. The information processing system according to claim 5, wherein the change unit decreases the threshold value used for comparison with the remaining amount in accordance with passage of time.

7. The information processing system according to claim 1, wherein
the acquisition unit acquires the remaining amount information in each time of passing a predetermined time, and
the generation unit generates information showing that the bonus is to be granted as the bonus information when an absolute value of a difference between the remaining amount specified by the acquired remaining amount information and a remaining amount specified by a remaining amount information that is acquired prior to the remaining amount information is smaller than a predetermined threshold value.

8. The information processing system according to claim 7, wherein the generation unit generates information showing that the bonus is not to be granted as the bonus information when the absolute value of the difference is larger than the predetermined threshold value.

9. The information processing system according to claim 1, wherein
the acquisition unit acquires the remaining amount information in each time of passing a predetermined time, and
the generation unit generates the bonus information in each time of passing a predetermined time based on the remaining amount information acquired in each time of passing the predetermined time.

10. The information processing system according to claim 2, further comprising
a setting unit configured to set the threshold value used for comparison with the remaining amount for each user.

11. The information processing system according to claim 10, wherein the setting unit sets the threshold value used for comparison with the remaining amount based on a user's past usage history of a fuel.

12. The information processing system according to claim 11, wherein the setting unit sets the threshold value so that as an average value of user's past usage amount of the fuel is larger, the threshold value is smaller.

13. The information processing system according to claim 1, wherein the generation unit generates information showing that a larger number of bonus than a number of bonus in a case where the remaining amount is smaller than a predetermined threshold value is to be granted as the bonus information when the remaining amount specified by the acquired remaining amount information is larger than the threshold value.

14. The information processing system according to claim 1, wherein the generation unit generates information showing that a larger number of types of bonuses than a number of types of bonus in a case where the remaining amount is smaller than a predetermined threshold value is to be granted as the bonus information when the remaining amount specified by the acquired remaining amount information is larger than the threshold value.

15. The information processing system according to claim 1, wherein the generation unit generates information showing that a bonus with a larger monetary value than a monetary value granted in a case where the remaining amount is smaller than a predetermined threshold value is to be granted as the bonus information when the remaining amount specified by the acquired remaining amount information is larger than the threshold value.

16. A program comprising instructions that cause a computer to execute functions of:
acquiring a remaining amount information that is information regarding a remaining amount of fuel supplied to a fuel cell;
generating bonus information based on the acquired remaining amount information, the bonus information being information regarding a bonus granted to a user; and
associating the generated bonus information with a user who uses the fuel, the fuel being an object for acquiring the remaining amount information.
